(19) Europäisches Patentamt / European Patent Office / Office européen des brevets

(11) **EP 4 137 893 A1**

(12) **DEMANDE DE BREVET EUROPEEN**

(43) Date de publication:
**22.02.2023 Bulletin 2023/08**

(21) Numéro de dépôt: **21192341.2**

(22) Date de dépôt: **20.08.2021**

(51) Classification Internationale des Brevets (IPC):
**G04B 17/28** (2006.01)   **G04B 27/00** (2006.01)
**G04B 45/02** (2006.01)   **G02B 5/00** (2006.01)
**G04F 7/08** (2006.01)   **G04B 19/16** (2006.01)

(52) Classification Coopérative des Brevets (CPC):
**G04B 45/02; G02B 5/005; G04B 17/285;**
**G04B 27/004;** G04B 19/16; G04F 7/0828

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**
Etats d'extension désignés:
**BA ME**
Etats de validation désignés:
**KH MA MD TN**

(71) Demandeur: **Montres Breguet S.A.**
**1344 L'Abbaye (CH)**

(72) Inventeur: **STRANCZL, Marc**
**1260 Nyon (CH)**

(74) Mandataire: **ICB SA**
**Faubourg de l'Hôpital, 3**
**2001 Neuchâtel (CH)**

(54) **DISPOSITIF À DÉPLOIEMENT DE TYPE DIAPHRAGME, NOTAMMENT POUR L' HORLOGERIE**

(57)   L'invention se rapporte à un dispositif à déploiement (1) de type diaphragme, notamment pour l'horlogerie, le dispositif comportant une première armature rigide (2) et une deuxième armature déformable (3), la première armature rigide (2) et la deuxième armature déformable (3) étant reliées l'une à l'autre, de sorte que la deuxième armature déformable (3) passe d'une première configuration étendue à une deuxième configuration compacte, et réciproquement, le dispositif (1) définissant une première géométrie lorsque la deuxième armature déformable (3) est dans la première configuration étendue, et définissant une deuxième géométrie plus petite que la première géométrie, lorsque la deuxième armature déformable (3) est dans la deuxième configuration compacte, le dispositif (1) s'étendant sensiblement dans un même plan lorsque la deuxième armature est dans la première ou dans la deuxième configuration, caractérisé en ce que la deuxième armature déformable (3) comprend des premières portions déformables (7) et des portions rigides (5, 6) assemblées alternativement, une première portion déformable reliant une portion rigide (5, 6) à une portion rigide (5, 6) suivante.

L'invention se rapporte aussi à une pièce d'horlogerie comprenant un tel dispositif d'affichage (1).

Fig. 2

EP 4 137 893 A1

## Description

### Domaine technique de l'invention

L'invention se rapporte à un dispositif à déploiement de type diaphragme, notamment pour l'horlogerie.

L'invention se rapporte également à une pièce d'horlogerie comportant un tel dispositif à déploiement.

### Arrière-plan technologique

Les dispositifs à déploiement de type diaphragme sont des éléments ayant une armature qui peut passer d'une configuration compacte, dans laquelle le dispositif présente un volume ou une géométrie réduite, à une configuration étendue, dans laquelle le dispositif présente un volume ou une géométrie plus importante.

Ces dispositifs sont souvent utilisés en horlogerie, en particulier dans les dispositifs d'affichages ou dans des dispositifs d'entraînement, voire de blocage d'axe de rotation d'une roue.

Dans les dispositifs d'affichages, ils peuvent servir d'écran amovible pour dissimuler une portion ou la totalité d'une information présentée par le dispositif d'affichage. Dans la configuration compacte, l'information est découverte afin d'être visible, par exemple par le porteur d'une montre comprenant le dispositif d'affichage, tandis que dans la position étendue, le dispositif recouvre l'information.

Des exemples de dispositifs d'affichages sont montrés dans les documents CH46061, CH711228, DE29521914, DE1985554 ou EP1842112.

Dans un autre exemple d'application, le document EP3671370 montre un dispositif à déploiement permettant de coupler deux éléments rotatifs superposés. Dans la configuration compacte, les deux éléments sont couplés par le dispositif à déploiement en contact avec les deux éléments pour que l'un des éléments entraîne l'autre élément en rotation. En configuration étendue, les deux éléments sont découplés, de sorte que la rotation de l'un n'entraîne plus la rotation de l'autre.

D'autres applications sont encore possibles, par exemple dans un système de blocage de la rotation d'un balancier d'un organe régulateur. Dans la configuration étendue, le dispositif à déploiement actionne un levier de blocage du balancier, alors que dans la configuration compacte, le levier n'est plus actionné, de manière à laisser le balancier en mouvement.

Cependant, l'actionnement de tels dispositifs à déploiements de type diaphragme est difficile, car il demande des articulations complexes pour pouvoir agir sur le dispositif et le faire changer de configuration. En effet, elles sont formées d'une multiplicité d'éléments joints par des d'articulations, formant notamment des pivots entre lesdites portions.

Or, ces articulations rendent le dispositif lent à actionner lorsqu'on veut passer d'une configuration à l'autre.

### Résumé de l'invention

L'invention a pour but de remédier aux inconvénients précités, et vise à fournir un dispositif à déploiement de type diaphragme, dont l'actionnement est simple et rapide.

A cette fin, l'invention se rapporte à un dispositif à déploiement de type diaphragme, notamment pour l'horlogerie, le dispositif à déploiement comportant une première armature rigide et une deuxième armature déformable, la première armature rigide et la deuxième armature déformable étant reliées l'une à l'autre, de sorte que la deuxième armature déformable passe d'une première configuration étendue à une deuxième configuration compacte, et réciproquement, le dispositif définissant une première géométrie lorsque la deuxième armature est dans la première configuration étendue, et définissant une deuxième géométrie plus petite que la première géométrie, lorsque la deuxième armature est dans la deuxième configuration compacte, le dispositif s'étendant sensiblement dans un même plan lorsque la deuxième armature est dans la première ou dans la deuxième configuration.

Le dispositif à déploiement est remarquable en ce que la deuxième armature déformable comprend des premières portions déformables et des portions rigides assemblées alternativement, une première portion déformable reliant une portion rigide à une portion rigide suivante.

Ainsi, le dispositif est facile à utiliser grâce à la combinaison de portions déformables et de portions rigide, car les portions rigides peuvent être déplacées pour actionner le dispositif plus rapidement. En effet, on agit alors directement sur l'armature déformable, qui peut être étendue ou compactée avec efficacité. De plus, cette combinaison permet d'utiliser des portions déformables, telles des lames flexibles, en gardant un dispositif suffisamment rigide pour des applications demandant une résistance à la flexion, par exemple dans les systèmes de blocage.

Selon une forme de réalisation particulière de l'invention, la totalité de la première armature rigide et la totalité de la deuxième armature déformable forment le premier ensemble monobloc.

Selon une forme de réalisation particulière de l'invention, une deuxième partie de la première armature rigide et une deuxième partie de la deuxième armature déformable forment un deuxième ensemble monobloc.

Selon une forme de réalisation particulière de l'invention, le premier ensemble et le deuxième ensemble sont superposés l'un sur l'autre.

Selon une forme de réalisation particulière de l'invention, la deuxième armature déformable comprend au moins deux volets mobiles, de préférence quatre volets mobiles, les volets étant répartis par symétrie angulaire.

Selon une forme de réalisation particulière de l'invention, les volets délimitent la première ouverture de la première configuration et la deuxième ouverture de la deuxième configuration.

Selon une forme de réalisation particulière de l'invention, la matière du dispositif est à choisir parmi le silicium, un alliage de nickel-phosphore de type Ni/P, un alliage d'acier de type Fe/Ni/Co/Mo.

Selon une forme de réalisation particulière de l'invention, la deuxième armature déformable comprend des premières portions déformables et des portions rigides assemblées alternativement en série.

Selon une forme de réalisation particulière de l'invention, une première portion déformable relie une portion rigide à une portion rigide suivante.

Selon une forme de réalisation particulière de l'invention, la deuxième armature déformable comprend au moins une deuxième portion déformable, de préférence plusieurs deuxièmes portions déformables, reliant une ou plusieurs portions rigides à la première armature rigide.

Selon une forme de réalisation particulière de l'invention, les deuxièmes portions déformables relient une portion rigide sur deux à la première armature rigide.

Selon une forme de réalisation particulière de l'invention, les portions rigides reliées à la première armature rigide ont des formes différentes des autres portions rigides.

Selon une forme de réalisation particulière de l'invention, chaque portion déformable comprend une lame flexible reliant par ses extrémités deux portions rigides, ou une portion rigide et la première armature rigide.

Selon une forme de réalisation particulière de l'invention, le dispositif comprend des moyens de déplacement d'au moins une portion rigide, de préférence plusieurs portions rigides, afin de faire passer la deuxième armature de la configuration étendue à la configuration compacte et réciproquement.

Selon une forme de réalisation particulière de l'invention, la ou les portions rigides déplacées par les moyens de déplacement sont des portions rigides reliées à la première armature rigide.

Selon une forme de réalisation particulière de l'invention, la ou les portions rigides déplacées par les moyens de déplacement sont des portions rigides qui ne sont pas reliées à la première armature rigide.

Selon une forme de réalisation particulière de l'invention, les moyens de déplacement sont configurés pour produire un déplacement sensiblement rectiligne de la ou des portions rigides.

Selon une forme de réalisation particulière de l'invention, les moyens de déplacement sont configurés pour produire un déplacement rotatif de la ou des portions rigides.

Selon une forme de réalisation particulière de l'invention, les portions rigides reliées à la première armature rigide subissent un mouvement rotatif autour d'un point pivotement lorsque la deuxième armature passe de la configuration étendue à la configuration compacte et réciproquement.

Selon une forme de réalisation particulière de l'invention, la deuxième armature déformable délimite le périmètre externe du diaphragme, la première armature rigide étant agencée à l'intérieur dudit périmètre.

Selon une forme de réalisation particulière de l'invention, la première armature rigide délimite le périmètre externe du diaphragme, la deuxième armature étant agencée à l'intérieur dudit périmètre.

Selon une forme de réalisation particulière de l'invention, la première géométrie définit une première ouverture lorsque la deuxième armature déformable est dans la première configuration étendue, et la deuxième géométrie définit une deuxième ouverture, lorsque la deuxième armature déformable est dans la deuxième configuration compacte, la première ouverture étant plus étroite que la deuxième ouverture.

Selon une forme de réalisation particulière de l'invention, chaque volet est agencé sur une portion rigide différente de la deuxième armature déformable.

Selon une forme de réalisation particulière de l'invention, la première géométrie définit un premier périmètre lorsque la deuxième armature déformable est dans la première configuration étendue, et la deuxième géométrie définit un deuxième périmètre, lorsque la deuxième armature déformable est dans la deuxième configuration compacte, le premier périmètre étant plus grand que le deuxième périmètre.

Selon une forme de réalisation particulière de l'invention, la deuxième armature déformable comprend au moins un sabot, de préférence quatre sabots permettant de délimiter le périmètre variable du dispositif, chaque sabot étant agencé sur une portion rigide différente de la deuxième armature déformable.

Selon une forme de réalisation particulière de l'invention, le diaphragme forme une came dont la géométrie est variable.

L'invention se rapporte également à un mouvement d'une pièce d'horlogerie comportant un tel dispositif à déploiement.

Brève description des figures

D'autres particularités et avantages ressortiront clairement de la description qui en est faite ci-après, à titre indicatif et nullement limitatif, en référence aux dessins annexés, dans lesquels :

- la figure 1 est une représentation schématique d'un dispositif à déploiement de type diaphragme sans volets, selon un premier mode de réalisation de l'invention ;

- la figure 2 est une représentation schématique du dispositif à déploiement de type diaphragme du premier mode de réalisation de l'invention en configuration compacte avec volets ;

- la figure 3 est une représentation schématique du dispositif à déploiement de type diaphragme du premier mode de réalisation de l'invention en configuration intermédiaire avec volets ;

-   la figure 4 est une représentation schématique du dispositif à déploiement de type diaphragme du premier mode de réalisation de l'invention en configuration étendue avec volets ;

-   la figure 5 est une représentation schématique du dispositif à déploiement de type diaphragme du premier mode de réalisation de l'invention appliqué à un système de blocage d'un axe de balancier ;

-   la figure 6 est une représentation schématique d'un dispositif à déploiement de type diaphragme selon un deuxième mode de réalisation de l'invention ;

-   la figure 7 est une représentation schématique séparée du dispositif à déploiement de type diaphragme du deuxième mode de réalisation de l'invention ;

-   la figure 8 est une représentation schématique d'une couche du dispositif à déploiement de type diaphragme du deuxième mode de réalisation de l'invention ;

-   la figure 9 est une représentation schématique du dispositif à déploiement de type diaphragme du deuxième mode de réalisation de l'invention en configuration compacte ;

-   la figure 10 est une représentation schématique du dispositif à déploiement de type diaphragme du deuxième mode de réalisation de l'invention en configuration intermédiaire ;

-   la figure 11 est une représentation schématique du dispositif à déploiement de type diaphragme du deuxième mode de réalisation de l'invention en configuration étendue ;

-   la figure 12 est une représentation schématique d'un dispositif à déploiement de type diaphragme selon un troisième mode de réalisation de l'invention ;

-   la figure 13 est une représentation schématique du dispositif à déploiement de type diaphragme du troisième mode de réalisation de l'invention en configuration compacte ; et

-   la figure 14 est une représentation schématique du dispositif à déploiement de type diaphragme du troisième mode de réalisation de l'invention en configuration étendue.

Description détaillée de l'invention

L'invention se rapporte à un dispositif à déploiement de type diaphragme 1, 10, 20, notamment pour l'horlogerie. Dans les modes de réalisation ci-dessous, le dispositif à déploiement de type diaphragme est par exemple un dispositif d'affichage d'une pièce d'horlogerie, par exemple dans un mouvement d'horlogerie d'une montre.

Le dispositif à déploiement comprend une première armature rigide 2 et une deuxième armature déformable 3. On entend par rigide, une armature n'ayant pas vocation à être flexible dans une utilisation normale de ce dispositif 1, 10, 20, tandis que l'armature déformable a pour vocation de se déformer pendant l'utilisation du dispositif 1, 10, 20.

La première armature rigide 2 comprend un cadre 4 en forme de carré, chaque côté étant formé par exemple d'une branche. Le cadre 4 définit un espace intérieur dans lequel est agencée la deuxième armature déformable 3. Ainsi, la première armature rigide 2 délimite le périmètre externe du dispositif 1, tandis que la deuxième armature flexible 3 est agencée à l'intérieur dudit périmètre.

Par sa flexibilité, la deuxième armature déformable 3 peut passer d'une première configuration étendue à une deuxième configuration compacte. Le dispositif 1 s'étend sensiblement dans un même plan, lorsque la deuxième armature déformable 3 est dans la première ou dans la deuxième configuration.

La deuxième armature déformable 3 a un agencement comprenant des portions flexibles 7, 8 et des portions rigides 5, 6. Les portions flexibles 7, 8 relient les portions rigides 5, 6 entre elles ou relient des portions rigides 5, 6 à la première armature rigide 2.

Chaque portion flexible 7, 8 comprend une lame flexible reliée, soit à la première armature rigide 2 par une extrémité et à une portion rigide 5, 6 par l'autre extrémité, soit à deux portions rigides 5, 6, par une extrémité pour chaque portion rigide 5, 6. Les lames flexibles ont de préférence une forme droite allongée longitudinalement.

Les portions rigides sont des branches rigides 5, 6, qui peuvent être soit droites 6 ou formant un U.

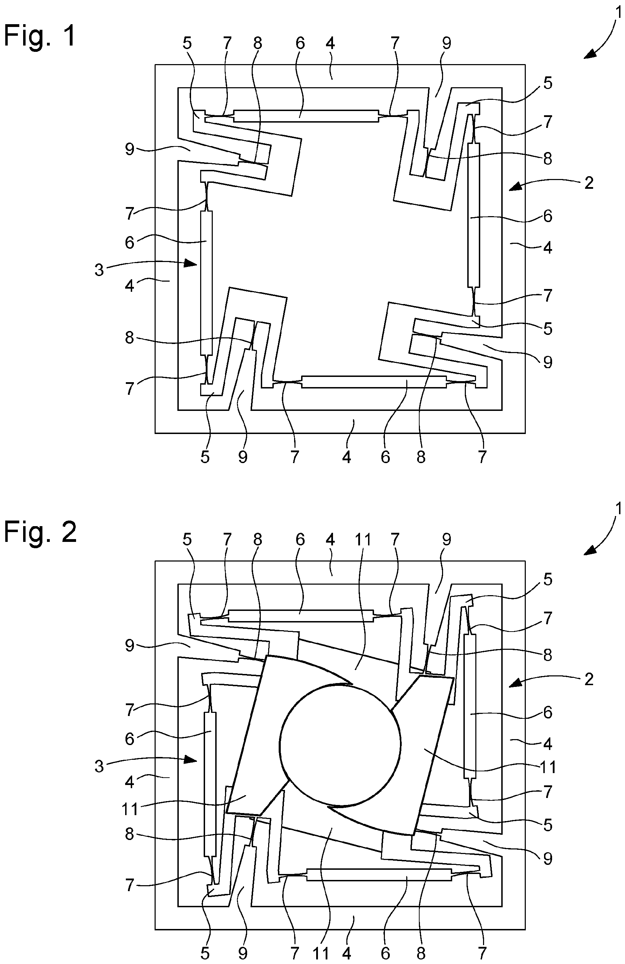

Selon l'invention, dans le mode de réalisation des figures 1 à 5, la deuxième armature déformable 3 comprend alternativement en série, une branche rigide et une lame flexible. Plus précisément, l'armature déformable comprend en série, un groupe comprenant en série une branche rigide 5 en forme de U, une première lame flexible droite 7, une branche rigide droite 6, et une seconde lame flexible 7. Les extrémités libres des lames flexibles 7 sont jointes aux extrémités libres des branches rigides 5, 6. Les lames flexibles 7 et la branche droite 6 sont sensiblement colinéaires, tandis que le U est agencé perpendiculairement aux lames dans le plan de la deuxième armature flexible. L'extrémité des branches du U est agencée au niveau des extrémités des lames flexibles 7, sa base étant sensiblement parallèle à la branche rigide droite 6. L'intérieur du U est orienté vers la première armature rigide 2. La première armature rigide 2 comprend un ergot 9 s'étendant depuis chaque côté vers l'intérieur de chaque U de la deuxième armature déformable 3.

La deuxième armature déformable 3 comprend ainsi quatre groupes mis en série pour former un carré à l'intérieur du cadre 4 de la première armature rigide 2, chaque groupe longeant un côté du cadre 4 à l'intérieur de l'espace du cadre 4. Les groupes sont perpendiculaires l'un par rapport à l'autre. Chaque ensemble comprend une branche rigide en U, une première lame flexible 7, une branche rigide droite 6, et une deuxième lame flexible 7.

La deuxième armature déformable 3 est reliée à la première armature rigide 2 par des troisième lames flexibles 8 agencées dans le prolongement de l'ergot 9, chaque troisième lame flexible 8 relie l'extrémité de l'ergot 9 à la base du U en pénétrant dans l'espace défini par le U.

Ainsi, la première armature rigide 2 et la deuxième armature déformable 3 sont jointes l'une à l'autre par des points d'ancrage définis à l'extrémité de chaque ergot. Ces points d'ancrage définissent localement des axes de rotation autour desquels l'armature déformable peut tourner lorsqu'elle se déforme.

Le dispositif 1 comprend un volet 11 agencé sur chaque portion rigide 5 en U, de préférence supporté par la base du U. Les volets 11 s'étendent vers le centre du dispositif 1 pour définir une ouverture. Le mode de réalisation des figures 1 à 4 comprend deux paires de volets 11 opposés disposés perpendiculairement l'un par rapport à l'autre. Chaque volet 11 est agencé sur la base du U. Un volet présente une forme allongée dont l'extrémité libre s'écarte avec un bord arrondi en forme de crochet orienté vers le centre du dispositif 1. Deux volets 11 en vis-à-vis sont sensiblement symétriques par rapport au centre du dispositif 1. Les volets sont répartis par symétrie angulaire selon un angle *a* entre deux volets, où

$$a = \frac{360}{n}$$ ; avec *n* le nombre de volets.

Chaque volet 11 recouvre ou est recouvert en portion par le volet adjacent 11. Ainsi, les bords arrondis des volets forment une ouverture sensiblement circulaire selon la disposition des volets les uns par rapport aux autres.

De préférence, la première armature rigide 2 et la deuxième armature déformable 3 forment au moins en partie un ensemble monobloc. Ici, la première armature rigide 2 en entier et la deuxième armature déformable 3 en entier forment l'ensemble monobloc. Les deux armatures forment une pièce unique continue d'un seul tenant.

De préférence, les deux armatures viennent d'une même matière. La matière du dispositif 1 est par exemple à choisir parmi le silicium, un alliage de nickel-phosphore de type Ni/P ou un alliage d'acier de type Fe/Ni/Co/Mo.

Ainsi, les deux armatures 2, 3 sont fabriquées dans un même procédé pour gagner du temps et baisser le coût de fabrication. Optionnellement, les volets sont également formés d'un seul tenant avec les deux armatures 2, 3, dans un même matériau.

Pour le silicium, le dispositif 1 est de préférence fabriqué par un procédé de gravure ionique réactive profonde de type DRIE (pour Deep Reactive Ion Etching en anglais).

On utilise un procédé classique de photolithographie de type LIGA pour former le dispositif 1 en alliage de nickel-phosphore, ou en alliage d'acier.

Le dispositif 1 comprend des moyens de déplacement, non représentés sur les figures, configurés pour faire passer la deuxième armature déformable 3 de la configuration compacte à la configuration étendue et réciproquement. Ces moyens de déplacement peuvent être également réalisé par des éléments flexibles.

A cette fin, les moyens de déplacement exercent un déplacement sur au moins une portion rigide de la deuxième armature déformable 3.

De préférence, dans ce mode de réalisation, le déplacement est exercée sur une branche rigide droite 6. De préférence, les moyens de déplacement exercent une force sur plusieurs branches rigides droites 6 de la deuxième armature déformable 3.

Les moyens de déplacement comprennent par exemple une bielle de commande, qui est reliée par une tige agencée à travers une ouverture dans branche rigide droite 6. En actionnant la bielle, la tige tire ou pousse la branche rigide droite 6.

Les moyens de déplacement sont configurés pour produire un déplacement sensiblement rectiligne de la ou des portions rigides droites 6 du deuxième groupe. De préférence le déplacement s'effectue selon la direction longitudinale de branches droites 6.

En déplaçant ces portions rigides, les portions rigides 5 en U se déplacent également par l'intermédiaire des lames flexibles 7 qui les relient aux branches rigides droites 6.

Les portions rigides 5 en U effectuent une rotation autour du point d'ancrage grâce aux lames flexibles 8 qui les relient aux ergots 9 de la première armature rigide 2. Ainsi, les volets 11 se déplacent et changent de positon selon la configuration du dispositif 1.

Le dispositif 1 définit une première ouverture lorsque la deuxième armature déformable 3 est dans la première configuration étendue, et il définit une deuxième ouverture lorsque la deuxième armature déformable 3 est dans la deuxième configuration compacte. La première ouverture étant plus étroite que la deuxième ouverture.

Comme le montre la figure 2, la deuxième armature déformable 3 est en position compacte, de sorte que les volets 11 sont écartés pour former une ouverture large. Les portions rigides droites 6 sont longitudinalement proches de la première armature rigide.

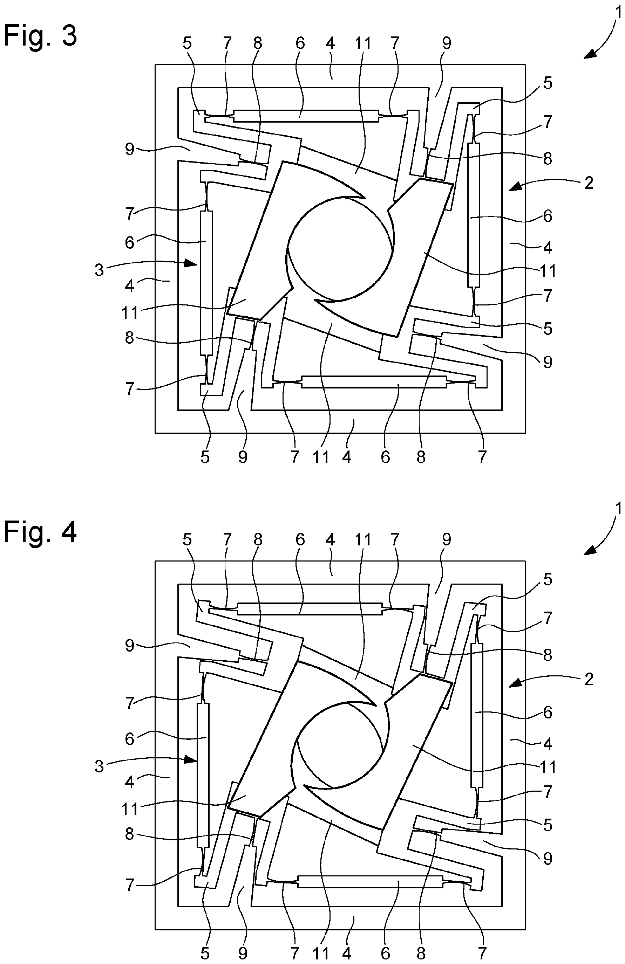

Sur la figure 3, la deuxième armature déformable 3 est dans une position intermédiaire, les portions rigides droites 6 ayant été déplacées longitudinalement pour les éloigner de la première armature rigide 2. Ainsi, l'ouverture du dispositif est plus étroite que l'ouverture du dispositif 1 de la figure 1.

Et dans la figure 4, la deuxième armature déformable 3 est dans la position étendue, les portions rigides droites 6 étant encore plus éloignées longitudinalement de la première armature rigide 2. Ainsi, on obtient une ouverture encore plus étroite.

De préférence, la position intermédiaire est choisie comme position de repos du dispositif, pour pouvoir passer dans la position étendue ou dans la position compacte plus rapidement. En effet, le déplacement de la position de repos à l'une des deux autres positions est plus court, que si on choisit l'une de ces deux autres positions comme position de repos.

Dans un mode de réalisation particulier, les volets 11 peuvent se chevaucher et fermer complètement l'ouverture, afin de former un écran sans ouverture. Le dispositif 1 est complètement fermé dans la configuration étendue de la deuxième armature flexible 3, par exemple dans le cas d'un dispositif d'affichage 1, où le diaphragme cache une information, telle la date ou l'heure.

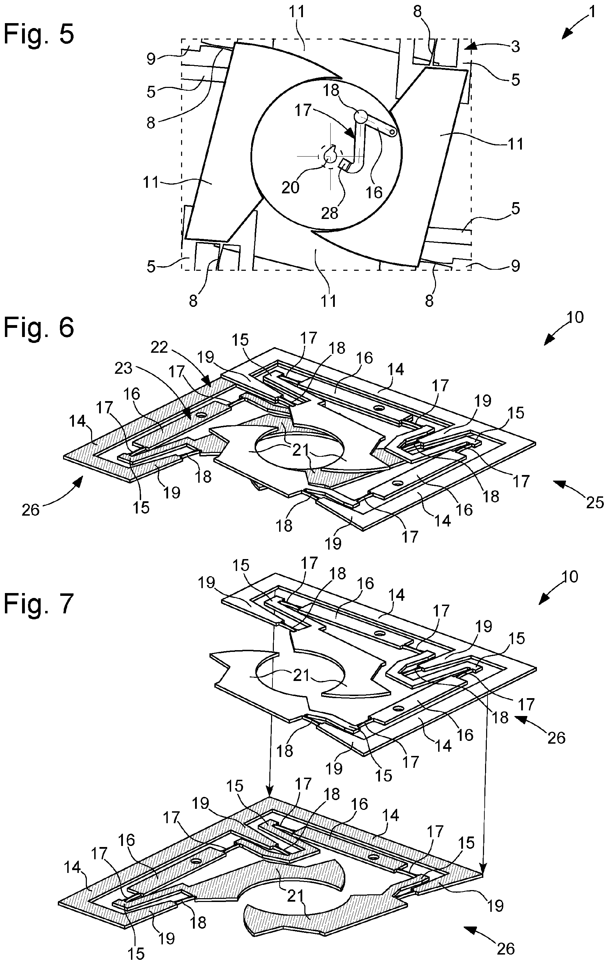

La figure 5 est un exemple d'application du dispositif 1 à déploiement de type diaphragme, appliqué à un système de blocage d'un balancier de type tourbillon. Dans la position étendue, les volets 11 se dirigent vers l'intérieur du cercle pour venir en contact avec la tige de commande 16 du levier stop 17 afin de faire tourner le levier stop 17 autour de son axe de rotation 18 avec une portion d'arrêt à son extrémité opposée à la tige de commande 16, pour venir en contact d'une came 20 sur l'axe du balancier spiral de manière à l'arrêter momentanément pour une remise à l'heure de la montre. Ce levier stop 17 peut arrêter momentanément le fonctionnement de la montre en bloquant le balancier-spiral au niveau de son axe de rotation 18, par exemple en contact d'une came de stop balancier 20 sur l'axe du balancier spiral 14. Le levier stop 17 est par exemple maintenu dans une position de repos par un ressort fixé d'une part sur le levier stop 17 entre la tige de commande 16 et l'axe de rotation 18, et d'autre part est fixé sur le support de cage.

Dans le deuxième mode de réalisation des figures 6 à 9, les armatures rigide 12 et déformable 13 sont réalisées sur deux couches superposées 25, 26, les couches définissant un premier et un deuxième ensemble superposés. Une première couche comprend une première partie des armatures rigide 12 et déformable 13, ainsi que deux volets 21, tandis que la deuxième couche comprend une deuxième partie des armatures rigide 12 et déformable 13, ainsi que deux volets 21. Les deux couches ont en commun un morceau du dispositif à déploiement 1, qui comprend tout ce qui entre deux ergots de l'armature rigide. Autrement dit, un côté du dispositif est reproduit en double, une fois sur chaque couche du dispositif 10.

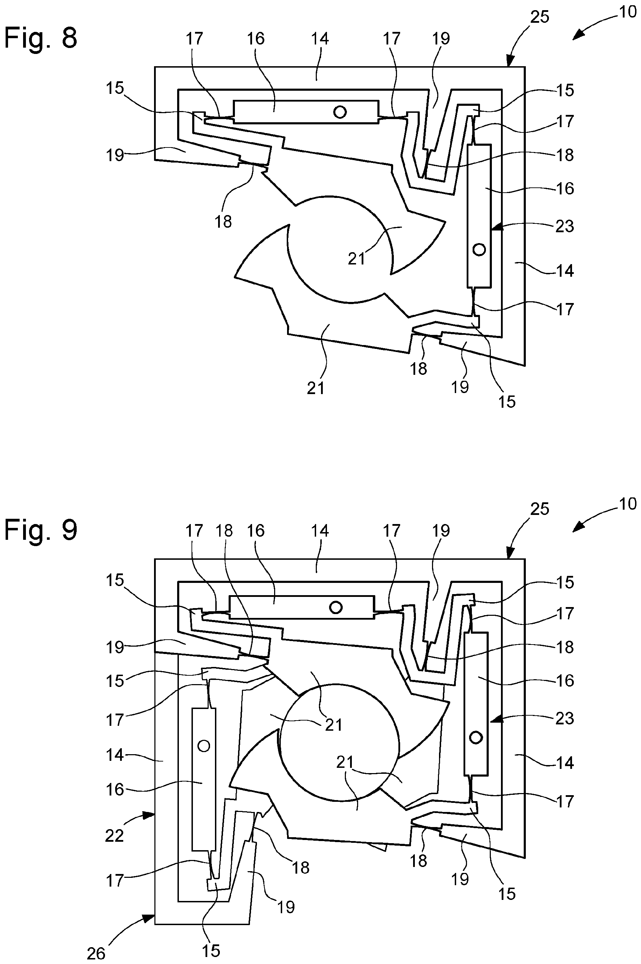

Sur les figures 7 et 8, pour l'armature rigide 12, la première 25 couche comporte un côté du dispositif 10, ainsi que le coin jusqu' à l'ergot 19 d'un deuxième côté, et un troisième côté opposé, jusqu'à l'ergot 19 suivant. Pour l'armature déformable 13, la première couche 25 comprend les éléments s'étendant de la moitié de la portion rigide 15 en U correspondant au deuxième côté jusqu'à la moitié de la portion rigide 15 en U correspondant au troisième côté opposé. En outre, la première couche 25 comporte deux volets 21 s'étendant depuis chaque moitié de la portion rigide 25 en U.

La deuxième couche 26 comprend la même configuration tournée de 90°, ici vers la gauche. Ainsi, par rapport au dispositif 1 du premier mode de réalisation, chaque couche 25, 26, comprend un côté entier, ainsi qu'un quart de côté et de trois quarts de côtés aux deux coins du côté entier.

Pour former le dispositif 10, les deux couches 25, 26 sont superposées, en contact l'une avec l'autre. Les deux couches 25, 26 formant un angle de 90° entre elles. Certains côtés sont formés par une seule couche, tandis que seul un côté est formé à la fois dans les deux couches 25, 26.

Les deux couches superposées 25, 26 forment un dispositif 10 tronqué par rapport au premier mode de réalisation du dispositif 1 des figures 1 à 5, dans lequel il manque une section d'un côté dans l'armature rigide 12 entre deux ergots 19, et une section de l'armature déformable 13 entre deux moitiés de portion rigides 15 en U. Ainsi, il manque un coin du cadre, ainsi que deux lames flexibles 17 et une portion rigide droite 16 en plus des deux moitiés de portion rigide 15 en U.

Le fonctionnement du dispositif 10 est le même que celui 1 du premier mode de réalisation. Lorsque les trois portions rigides droites 16 sont déplacées longitudinalement, la deuxième armature déformable 13 s'étend ou se comprime. Les deux portions rigides droites 16 opposées sont déplacées en sens inverse, tandis que la troisième est déplacée perpendiculairement dans un sens ou dans l'autre selon la configuration souhaitée.

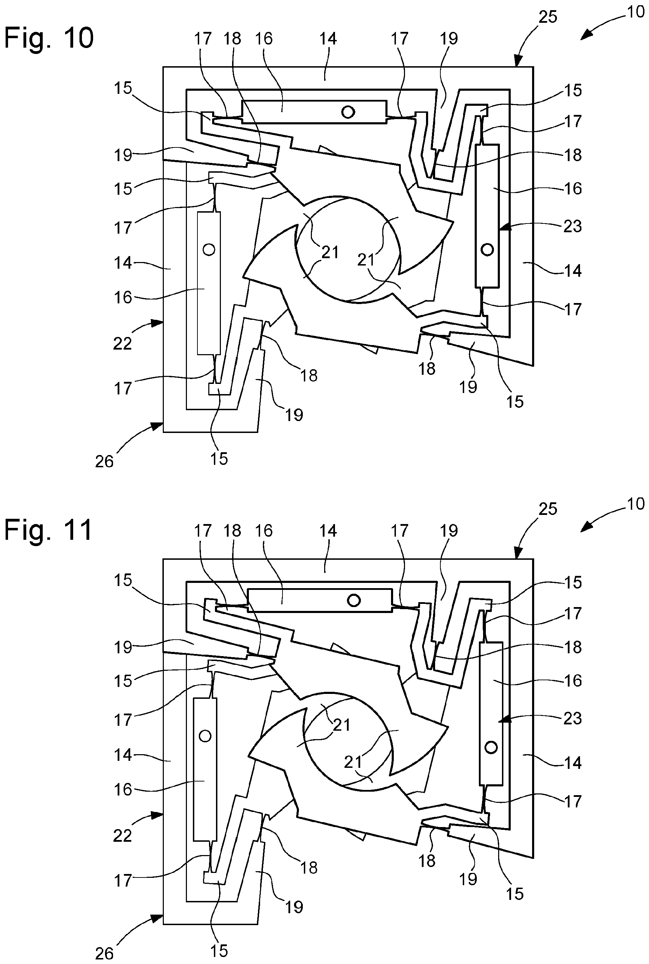

Sur la figure 9, la configuration étendue, l'ouverture formée par les volets 21 est large. L'ouverture est plus étroite dans une position intermédiaire du dispositif 10, telle que représentée sur la figure 10. Dans la configuration compacte de la figure 11, l'ouverture est la plus étroite.

L'actionnement du dispositif de ce mode de réalisation peut être effectué au moyen d'une goupille traversant les aux deux éléments rigides 16 des deux couches 25, 26. La goupille est par exemple actionnée par un bras mobile de commande comportant un trou oblong dans lequel la goupille est insérée.

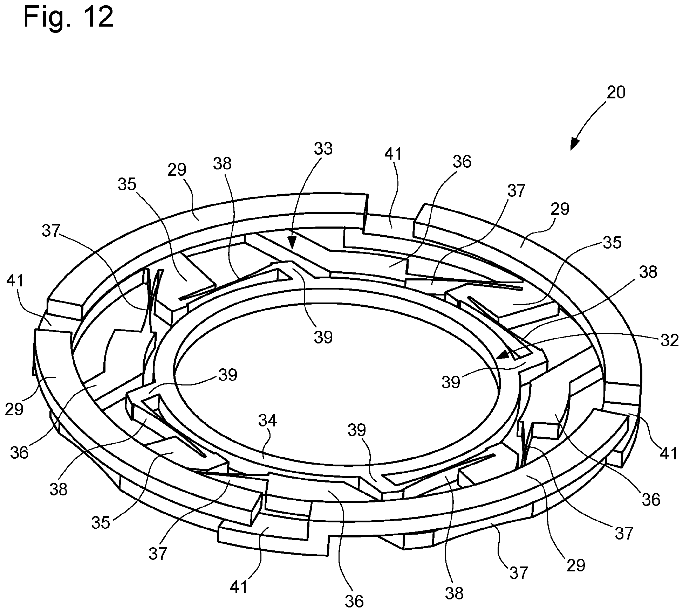

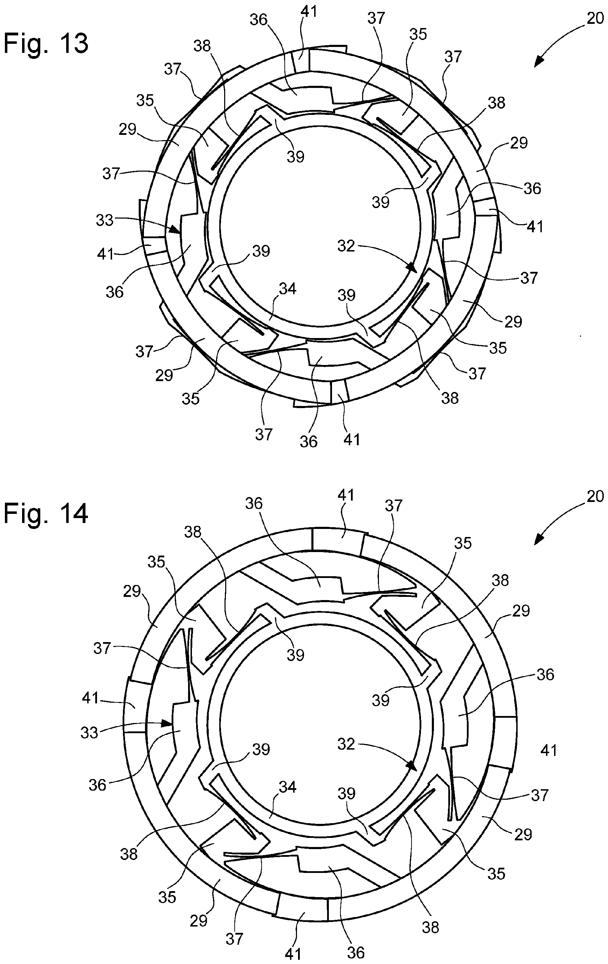

Le troisième mode de réalisation du dispositif à déploiement de type diaphragme 20, représenté sur les figures 12 à 14, comprend une centrale en forme d'anneau munie d'ergots 39 répartis angulairement autour de l'anneau, sur son côté externe. L'armature déformable s'étend vers l'extérieur autour de l'armature rigide. La deuxième armature déformable 33 délimite le périmètre externe du diaphragme, la première armature 32 étant agencée à l'intérieur dudit périmètre. Le dispositif 20 est sensiblement plat et s'étend principalement dans un plan.

Selon l'invention, la deuxième armature déformable 33, comprend des portions rigides 35, 36 et des portions flexibles 37, 38. La deuxième armature déformable 33 comprend des premières 35 et des deuxièmes portions rigides 36, de préférence quatre chacune, qui sont réparties alternativement autour de l'anneau. Les premières portions rigides 35 ont une forme triangulaire avec une protubérance extérieure et une protubérance antérieure à deux sommets opposés. Et les deuxièmes portions rigides 36 ont une forme allongée coudée.

Les portions flexibles comprennent des lames flexibles 37, 38 reliant les portions rigides 35, 36 entre elles, ainsi que les premières portions rigides 35 aux ergots 39 de l'anneau central. Une première lame flexible 38 est agencée en série entre une protubérance du triangle et un ergot 39, tandis qu'une deuxième lame flexible 37 est agencée entre l'autre protubérance et une extrémité externe de la portion rigide coudée 36. Enfin, une troisième lame 37 est agencée en série entre l'autre extrémité de la portion rigide coudée 36 et la protubérance externe de la première portion rigide 35.

Le dispositif 20 comprend en outre plusieurs sabots 29 en forme d'arcs, ici 4, agencés chacun sur la portion rigide triangulaire 35. Les sabots 29 sont de préférence monoblocs avec chaque portion rigide triangulaire 35, et s'étendent depuis l'excroissance externe de la portion rigide triangulaire 35. Les sabots 29 forment la périphérie circulaire du dispositif, qui s'écarte de l'anneau, lorsque l'armature déformable s'étend, et qui se rapproche de l'anneau, lorsque l'armature déformable est compacte.

Chaque sabot 29 comprend un étagement 41 pour pouvoir se superposer en partie sur l'arc du sabot 29 adjacent. Quelle que soit la configuration du dispositif 20 en positon compact ou étendue, les sabots 29 se superposent plus ou moins. Ainsi, les sabots 29 peuvent se mouvoir les uns par rapport aux autres, tout en formant une barrière continue autour du dispositif 20, quelle que soit sa configuration. Cette barrière peut venir en contact d'autres éléments du mouvement d'horlogerie pour déclencher ou bloquer un mécanisme.

En positon étendue du dispositif 20, les sabots forment une barrière sensiblement circulaire autour d'un axe, tandis qu'en position compacte du dispositif 20, les sabots 29 sont désaxés les uns par rapport aux autres, tout en gardant un chevauchement entre sabots 29 adjacents.

Pour ce mode de réalisation, la première armature rigide 32 en entier et la deuxième armature déformable 33 en entier forment un ensemble monobloc.

Dans ce mode de réalisation, les moyens de déplacement sont reliés aux premières portions rigides 35, de manière à leur impulser un mouvement rotatif autour d'un axe les traversant. Ainsi, les moyens de déplacement sont configurés pour produire un déplacement rotatif des premières portions rigides 35, et permettre par conséquent l'écartement ou le rapprochement des sabots 29. Les premières lames flexibles 38 servent à relier la deuxième armature déformable 33 à la première armature rigide 32, ainsi que de moyens de rappel des premières portions rigides 35 dans la position correspondant à la configuration compacte.

La rotation des premières portions rigides 35, induit le déplacement des sabots vers l'extérieur dispositif 20 dans un sens de rotation, et vers l'intérieur du dispositif 20 dans le sens inverse. Simultanément, les sabots 29 tournent légèrement sur eux-mêmes pour passer d'une première position correspondant à la configuration compacte à une deuxième position correspondant à la configuration étendue, et réciproquement.

Les deuxième portions rigides 36 tournent également sur ellesmêmes grâce aux premières lames flexibles 37, suite à la rotation des premières portions rigides 37. Les deuxième portions rigides 36 servent à rigidifier la deuxième armature déformable 33.

Un tel dispositif 20 peut servir dans un système de blocage, par exemple d'un tourbillon, ou de couplage, par exemple entre deux rouages superposés. Par exemple, le diaphragme vient en appui d'une came agencée à distance du dispositif pour déclencher le système. En position étendue, le diaphragme s'écarte et vient en appliquer une force contre la came ou un plot.

Bien entendu, la présente invention ne se limite pas aux exemples illustrés mais est susceptible de diverses variantes et modifications qui apparaîtront à l'homme de l'art. D'autres applications sont possibles, dans lesquels le diaphragme forme par exemple une came dont la géométrie est variable. Les lames flexibles peuvent aussi avoir une forme de barre avec des cols flexibles, ou être remplacées par une combinaison de lames, qui peuvent être croisées ou droites, voire ou être remplacées par un élément flexible.

**Revendications**

1. Dispositif à déploiement (1, 10, 20) de type diaphragme, notamment pour l'horlogerie, le dispositif comportant une première armature rigide (2, 12, 32) et une deuxième armature déformable (3, 13, 33), la première armature rigide (2, 12, 32) et la deuxième armature déformable (3, 13, 33) étant reliées l'une à l'autre, de sorte que la deuxième armature déformable (3, 13, 33) passe d'une première configuration étendue à une deuxième configuration compacte, et réciproquement, le dispositif (1, 10, 20) définissant une première géométrie lorsque la deuxième armature déformable (3, 13, 33) est dans la première configuration étendue, et définissant une deuxième géométrie plus petite que la première géométrie, lorsque la deuxième armature déformable (3, 13, 33) est dans la deuxième configuration compacte, le dispositif (1, 10, 20) s'étendant sensiblement dans un même plan lorsque la deuxième armature est dans la première ou dans la deuxième configuration, **caractérisé en ce que** la deuxième armature déformable (3, 13, 33) comprend des premières portions déformables (7, 17, 37) et des portions rigides (5, 6, 15, 16, 35, 36) assemblées alternativement, une première portion déformable reliant une portion rigide (5, 6, 15, 16, 35, 36) à une portion rigide (5, 6, 15, 16, 35, 36) suivante.

2. Dispositif selon la revendication 1, **caractérisé en ce que** la deuxième armature déformable (3, 13, 33) comprend au moins une deuxième portion déformable (8, 18, 38), de préférence plusieurs deuxièmes portions déformables, reliant une ou plusieurs portions rigides (5, 15, 35) à la première armature rigide (2, 12, 32).

3. Dispositif selon la revendication 2, **caractérisé en ce que** les deuxièmes portions déformables relient une portion rigide (5, 15, 35) sur deux à la première armature rigide (2, 12, 32).

4. Dispositif selon la revendication 2 ou 3, **caractérisé en ce que** les portions rigides (5, 15, 35) reliées à la première armature rigide (2, 12, 32) ont des formes différentes des autres portions rigides (6, 16, 36).

5. Dispositif selon l'une, quelconque, des revendications 1 à 4, **caractérisé en ce que** chaque portion déformable (7, 8, 17, 18, 37, 38) comprend une lame flexible reliant par ses extrémités deux portions rigides (5, 6, 15, 16, 35, 36), ou une portion rigide (5, 15, 35) et la première armature rigide (2, 12, 32).

6. Dispositif selon l'une, quelconque, des revendications précédentes, **caractérisé en ce que** la première armature rigide (2, 12) délimite le périmètre externe du diaphragme, la deuxième armature déformable (3, 13) étant agencée à l'intérieur dudit périmètre.

7. Dispositif selon la revendication 6, **caractérisé en ce que** la première géométrie définit une première ouverture lorsque la deuxième armature déformable (3, 13) est dans la première configuration étendue, et la deuxième géométrie définit une deuxième ouverture, lorsque la deuxième armature déformable (3, 13) est dans la deuxième configuration compacte, la première ouverture étant plus étroite que la deuxième ouverture.

8. Dispositif la revendication 6 ou 7, **caractérisé en ce que** la deuxième armature déformable (3, 13, 33) comprend au moins deux volets mobiles, de préférence quatre volets mobiles, les volets étant répartis par symétrie angulaire.

9. Dispositif selon la revendication 8, chaque volet (11, 21) étant agencé sur une portion rigide (5, 15) différente de la deuxième armature déformable (3, 13).

10. Dispositif selon la revendication 7 et l'une des revendications 8 et 9, **caractérisé en ce que** les volets (11, 21) délimitent la première ouverture de la première configuration et la deuxième ouverture de la deuxième configuration.

11. Dispositif selon l'une, quelconque, des revendications 1 à 5, **caractérisé en ce que** la deuxième armature déformable (33) délimite le périmètre externe du diaphragme, la première armature rigide (32) étant agencée à l'intérieur dudit périmètre.

12. Dispositif selon la revendication 11, **caractérisé en ce que** la première géométrie définit un premier périmètre lorsque la deuxième armature déformable (33) est dans la première configuration étendue, et la deuxième géométrie définit un deuxième périmètre, lorsque la deuxième armature déformable (33) est dans la deuxième configuration compacte, le premier périmètre étant plus grand que le deuxième périmètre.

13. Dispositif selon la revendication 12, **caractérisé en ce que** la deuxième armature déformable (33) comprend au moins un sabot (29), de préférence quatre sabots (29) permettant de délimiter le périmètre variable du dispositif (20), chaque sabot (29 étant agencé sur une portion rigide (35) différente de la deuxième armature déformable (33).

14. Dispositif selon l'une, quelconque, des revendications précédentes, **caractérisé en ce qu'**il comprend des moyens de déplacement d'au moins une portion rigide (6, 16, 35), de préférence plusieurs portions rigides (6, 16, 35), afin de faire passer la deuxième armature déformable (3, 13, 33) de la configuration étendue à la configuration compacte et réciproquement.

15. Dispositif selon la revendication 14, **caractérisé en ce que** la ou les portions rigides (35) déplacées par les moyens de déplacement sont des portions rigides (35) reliées à la première armature rigide (32).

16. Dispositif selon la revendication 14, **caractérisé en ce que** la ou les portions rigides (6, 16) déplacées par les moyens de déplacement sont des portions rigides (6, 16) qui ne sont pas reliées à la première armature rigide (32).

17. Dispositif l'une, quelconque, des revendications 14 à 16, **caractérisé en ce que** les moyens de déplacement sont configurés pour produire un déplacement sensiblement rectiligne de la ou des portions rigides (6, 16).

**18.** Dispositif l'une, quelconque, des revendications 13 à 16, **caractérisé en ce que** les moyens de déplacement sont configurés pour produire un déplacement rotatif de la ou des portions rigides (35).

**19.** Dispositif selon l'une, quelconque, des revendications 14 à 18, **caractérisé en ce que** les portions rigides (5, 15, 35) reliées à la première armature rigide (2, 12, 32) subissent un mouvement rotatif autour d'un point pivotement lorsque la deuxième armature déformable (3, 13, 33) passe de la configuration étendue à la configuration compacte et réciproquement.

**20.** Dispositif selon l'une, quelconque, des revendications précédentes, **caractérisé en ce qu'**au moins une première partie de la première armature rigide (2, 12, 32) et au moins une première partie de la deuxième armature déformable (3, 13, 33) forment un premier ensemble monobloc, de préférence venant d'une même matière.

**21.** Dispositif selon la revendication 20, **caractérisé en ce que** la totalité de la première armature rigide (2, 12, 32) et la totalité de la deuxième armature déformable (3, 13, 33) forment le premier ensemble monobloc.

**22.** Dispositif selon la revendication 20, **caractérisé en ce qu'**une deuxième partie de la première armature rigide (2, 12, 32) et une deuxième partie de la deuxième armature déformable (3, 13, 33) forment un deuxième ensemble monobloc.

**23.** Dispositif selon la revendication 22, **caractérisé en ce que** le premier ensemble et le deuxième ensemble sont superposés l'un sur l'autre.

**24.** Dispositif selon l'une, quelconque, des revendications 20 à 23, la matière du dispositif (1, 10, 20) est à choisir parmi le silicium, un alliage de nickel-phosphore de type Ni/P ou un alliage d'acier de type Fe/Ni/Co/Mo.

**25.** Pièce d'horlogerie, **caractérisée en ce qu'**elle comprend un dispositif à déploiement de type diaphragme (1, 10, 20) selon l'une, quelconque, des revendications précédentes.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Europäisches Patentamt
European Patent Office
Office européen des brevets

**RAPPORT DE RECHERCHE EUROPEENNE**

Numéro de la demande

**EP 21 19 2341**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | EP 3 671 370 A1 (PATEK PHILIPPE SA GENEVE [CH]) 24 juin 2020 (2020-06-24) | 1,5, 11-15, 18,19, 23-25 | INV. G04B17/28 G04B27/00 G04B45/02 |
| A | * alinéas [0017] – [0061]; figures 1-6 * | 2-4, 6-10,16, 17,20-22 | G02B5/00 |
| | ----- | | ADD. G04F7/08 |
| A | FR 3 069 139 A1 (OREAL [FR]) 25 janvier 2019 (2019-01-25) * page 5, ligne 7 – page 7, ligne 27; figures 1,2 * * page 7, alinéa 28 – page 8, alinéa 27; figures 3,4 * | 1-25 | G04B19/16 |
| | ----- | | |
| A | US 2015/037024 A1 (ZHOU GUANGYA [SG] ET AL) 5 février 2015 (2015-02-05) * alinéas [0035] – [0066]; figures 4-11 * | 1-25 | |
| | ----- | | |

**DOMAINES TECHNIQUES RECHERCHES (IPC)**

G04B
G02B
G04F

Le présent rapport a été établi pour toutes les revendications

| Lieu de la recherche | Date d'achèvement de la recherche | Examinateur |
|---|---|---|
| La Haye | 12 janvier 2022 | Cavallin, Alberto |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                             
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 19 2341

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-01-2022

| Document brevet cité au rapport de recherche | Date de publication | Membre(s) de la famille de brevet(s) | Date de publication |
|---|---|---|---|
| EP 3671370 A1 | 24-06-2020 | AUCUN | |
| FR 3069139 A1 | 25-01-2019 | AUCUN | |
| US 2015037024 A1 | 05-02-2015 | CN 104662473 A | 27-05-2015 |
| | | EP 2823351 A1 | 14-01-2015 |
| | | JP 2015512065 A | 23-04-2015 |
| | | KR 20150003182 A | 08-01-2015 |
| | | TW 201341942 A | 16-10-2013 |
| | | US 2015037024 A1 | 05-02-2015 |
| | | WO 2013133767 A1 | 12-09-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 46061
- CH 711228
- DE 29521914
- DE 1985554
- EP 1842112 A
- EP 3671370 A